# EUROPEAN PATENT APPLICATION

(11) **EP 3 375 750 A1**
(43) Date of publication of application: **19.09.2018**
(21) Application number: 17188622.9
(22) Date of filing: 30.08.2017
(51) Int. Cl.: B66F 11/04, B66F 17/00

(54) **AERIAL WORK PLATFORM WITH PROTECTION DEVICE OF ELECTRONIC SENSING TYPE**

(30) Priority: 17.03.2017 CN 201710160749
(71) Applicant: Zhejiang Dingli Machinery Co., LTD., Leidian Town Deqing, Zhejiang 313219 (CN)
(72) Inventor: XU, Shugen, Deqing,, Zhejiang 313219 (CN)
(74) Representative: J A Kemp

(57) **Abstract**

An aerial work platform with protection device of electronic sensing type includes: a vehicle (1), a telescopic transmission component (2) pivotablly installed on the vehicle and an operation platform (3) connected to a distal end of the telescopic transmission component. The operation platform comprises a bottom plate (32), a circular fence (34) disposed on a perimeter of the bottom plate and a control panel (36) installed on the circular fence; the control panel has a barrier (38) formed on its perimeter, the barrier comprises two side bars located at two lateral sides of the control panel, a protection device of electronic sensing type electrically connected with the control panel is disposed on the barrier, and the protection device of electronic sensing type comprises an optical transmitter (351) and an optical receiver (352) which cooperate with each other and are faced towards each other.

## Description

### FIELD OF THE INVENTION

The present invention relates to field of engineering mechanics and more particularly, relates to an engineering work vehicle, and most particularly, relates to an aerial work platform with Protection device of electronic sensing type.

### BACKGROUD OF THE INVENTION

Aerial work platform is an advanced aerial working mechanical device, and is capable of significantly improving efficiency, safety, and comfort of operators at height, and is also capable of reducing labor. Accordingly, it is widely employed in developed countries. This aerial work platform is also extensively used in China in many fields such as urban street lamp maintenance, tree trimming or the like. With rapid development of Chinese economy, aerial work platform is increasingly required in many situations such as engineering construction, industry installation, equipment repair, workshop maintenance, ship manufacture, electric power, municipal construction, airport, communications, city park, and transportation.

Generally speaking, during operation of an aerial work platform, its operation platform often rises to a high place. Then, an operator standing inside the operation platform depresses kinds of control buttons such that the operation platform will be raised or lowered or translated. Next, the operator performs various aerial works for example hanging a slogan banner on an outer wall of a building, cleaning an outer wall of a building, or conducts other works to the outer wall.

During foregoing aerial works, as the operation platform is close to a facility such as an outer wall to be handled, the operator accidently will be hurt due to collision with an external facility. As such, a protection device should be disposed at a suitable location of the operation platform of the aerial work platform for keeping safety of the operator.

A prior art aerial work platform uses a mechanical protection lever located between two lateral sides of the operation platform as its protection device. In case the operator is subject to external forces, his body will tilt toward an control panel and then contact the mechanical protection lever such that the lever will sway, thus cutting off the power and the aerial work platform stops to work due to loss of power. As a result, the operator is protected from being further squeezed to cause damage.

This kind of prior art mechanical protection lever as a protection device suffers from various drawbacks. For example, the mechanical protection lever has low sensitivity. That is, the mechanical lever will not cut off the power until the operator is squeezed and then triggers the lever. Moreover, the squeezing motion must reach a threshold to trigger the lever. Therefore, when the mechanical lever is triggered, in fact the operator has been slightly squeezed and damaged. Consequently, safety is low for a prior art aerial work platform with a mechanical protection lever. Furthermore, as the mechanical protection lever traverses the two lateral sides of the operator platform, meaning that the protection lever occupies the operation area of the operator, the control of kinds of buttons by the operator standing in the operation platform is restricted and as a result, it is uncomfortable for the operator to manipulate these buttons with ease. Therefore, it brings inconvenience to the operator.

In addition, this kind of prior art aerial work platform uses a mechanical protection lever as the protection device traversing the two lateral sides of the operation platform, and accordingly, this leads to a complex construction and increase in product cost.

Therefore, there is a need for an improved aerial work platform with advanced protection device of electronic sensing type to overcome drawbacks mentioned above.

### SUMMARY OF THE INVENTION

An object of the present invention is to address above problems and provide an aerial work platform with protection device of electronic sensing type with high sensitivity, security, simple construction, low cost, and longer lifetime.

To realize this object, the present invention proposes an aerial work platform with protection device of electronic sensing type includes: a vehicle, a telescopic transmission component pivotablly installed on the vehicle and an operation platform connected to a distal end of the telescopic transmission component. The operation platform includes a bottom plate, a circular fence disposed on a perimeter of the bottom plate and a control panel installed on the circular fence. The control panel has a barrier formed on its perimeter, the barrier includes two side bars located at two lateral sides of the control panel, a protection device of electronic sensing type electrically connected with the control panel is disposed on the barrier, and the protection device of electronic sensing type comprises an optical transmitter and an optical receiver which cooperate with each other and are faced towards each other.

Preferably, the optical transmitter and optical receiver are embedded into the two side bars respectively.

Furthermore, the circular fence is made of a plurality of protection rods, and the optical transmitter and optical receiver are embedded into the protection rods of the two side bars respectively.

Optionally, the optical transmitter and optical receiver are secured on top portions of the side bars respectively.

Preferably, the optical transmitter is an infra-red transmitter, and the optical receiver is an infra-red receiver.

Furthermore, a length-angle sensor for detecting a movement distance and luffing angle of the telescopic transmission component is disposed on said telescopic transmission component; a main controller is provided on the vehicle and is configured to cause a horizontal movement of the operation platform without vertical movement with respect to a first predefined location, or to cause a vertical movement of the operation platform without horizontal movement with respect to a second predefined location; and the length-angle sensor is electrically communicated with the main controller.

Furthermore, the telescopic transmission component is hinged to the vehicle by a supporting arm; and a luffing cylinder is disposed between the telescopic transmission component and supporting arm.

Furthermore, the telescopic transmission component is connected to the operation platform through a telescopic connection component; and a luffing cylinder is disposed between the telescopic connection component and telescopic transmission component.

Specifically, a plurality of operation buttons is provided on the control panel.

Compared with prior art techniques, the present invention brings the following good effects:

As a protection device, in particular a protection device of electronic sensing type including an optical transmitter and optical receiver of high sensitivity is installed on the operation platform, once the body of the operator obstructs propagation of rays; the protection device of electronic sensing type will send signals to a corresponding controller which in turn, cuts off engine power of the aerial work platform, thus stopping further running of the platform and avoiding further squeezing of the operator body and ensuring safety of the operator.

In contrast, a conventional mechanical protection lever works with lag. Also, as the optical transmitter and optical receiver of the protection device of electronic sensing type are oppositely disposed on the two side bars which are located at two lateral sides of the control panel respectively. Therefore, rays transmitted from the optical transmitter may be directly received by the optical receiver directly disposed on an opposing side bar. Comparatively, in a prior art electronic protection device, a transmitter and receiver are positioned on a same side, and a reflector on an opposite end functions to reflect rays sent by the transmitter back to the receiver. Therefore in the protection device of electronic sensing type of the invention, rays coming from the optical transmitter are directly received by the optical receiver installed on an opposite side without arrangement of an optical reflector. No optical reflector is used in the protection device of electronic sensing type, thus there being no need for an optical reflector and transmission manner of rays being changed. In current invention, fewer components are used, the structure is simple, the cost is inexpensive, and installation is convenient. Moreover, the transmission path of rays is short, and accordingly, more faster and sensitive response may be made.

Accordingly, as the optical transmitter and optical receiver are embedded into the two side bars respectively, the optical transmitter and optical receiver are effectively protected from being damaged by an external object due to collision, thereby reducing repair and maintenance cost. Moreover, they are also protected from dust, water and weathering and accordingly, their lifetime is effectively extended.

In addition, the optical transmitter and optical receiver are laterally disposed at two side bars of the control panel respectively without coming into a region between the two side bars. Consequently, operation space of the operator will not be occupied, thereby the operator being able to freely, conveniently and comfortably manipulate various buttons on the control panel.

Furthermore, in the aerial work platform with protection device of electronic sensing type of the invention, a length-angle sensor for detecting a movement distance and luffing angle of the telescopic transmission component is disposed on said telescopic transmission component; a main controller is provided on the vehicle; and the length-angle sensor is electrically communicated with the main controller. The main controller is able to determine a luffing angles and/or moving distance of related components following a predefined calculation rule and as a result, it is able to control movement and luffing of the related components based on the determination result to control moving manner of the operation platform. As such, it causes a horizontal movement of the operation platform without vertical movement with respect to a first predefined location (that is, horizontal movement realized not by the movement of the telescopic transmission component), or to cause a vertical movement of the operation platform without horizontal movement with respect to a second predefined location (that is, vertical movement). Therefore, when the aerial work platform is running, its operation platform is able to reach a desired position with ease. Especially, when pure vertical or horizontal movement is required, it can be done quickly and effectively.

Correspondingly, the telescopic transmission component is connected to the operation platform through a telescopic connection component. A luffing cylinder is disposed between the telescopic connection component and telescopic transmission component. This structure increases movement distance along a vertical and/or horizontal direction of the operation platform and enlarges working range. Furthermore, vertical movement of the operation platform is also achieved with ease.

In addition, the telescopic transmission component is connected to the operation platform through a telescopic connection component; and a luffing cylinder is disposed between the telescopic connection component and telescopic transmission component. Movement distance along a vertical and/or horizontal direction of the operation platform is also increased and working range enlarged due to telescopic characteristics of the telescopic transmission component. Most importantly, when the telescopic connection component moves along a horizontal direction, its vertical location will be kept unchanged. As such, working range in the horizontal direction is also extended.

In a summary, in current invention, fewer components are used, the structure is simple, the cost is inexpensive, and installation is convenient. Moreover, the transmission path of rays is short, and accordingly, more faster and sensitive response may be made. Moreover, a horizontal movement of the operation platform without vertical movement, or vertical movement of the operation platform without horizontal movement is realized, thus greatly improving operation convenience and working efficiency, and leading to a larger working range.

### BRIEF DESCRIPTION OF THE DRAWINGS

Figure 1 shows a schematic view of an aerial work platform with Protection device of electronic sensing type in accordance with a typical embodiment of the invention;
Figure 2 partially shows a schematic view of an aerial work platform with protection device of electronic sensing type, majorly showing structure of an operation platform;
Figure 3 shows another view of the structure shown in figure 2;
Figure 4 shows a partially enlarged view of portion N of figure 2;
Figure 5 shows a partially enlarged view of portion M of figure 1;
Figure 6 shows another schematic view of some front components of an aerial work platform with Protection device of electronic sensing type of figure 1, these front components including a transmission connection component, the operation platform and other related connective components;
Figure 7 shows a schematic view of a telescopic transmission component of the aerial work platform of figure 1;
Figure 8 shows a partially enlarged view of portion A of figure 7;
Figure 9 shows a partially enlarged view of portion B of figure 7;
Figure 10 shows a view of the telescopic transmission component of figure 7 in an expanded configuration;
Figure 11 denotes a structural view of internal major transmission members of the telescopic transmission component of figure 7, the major transmission members including a first sprocket wheel, a second sprocket wheel, a rope-expanding chain, a rope-retracting chain, and a retractable cylinder;
Figure 12 shows a schematic view of internal major transmission members of the telescopic transmission component of figure 7;
Figure 13 shows a schematic view of internal major transmission members of the telescopic transmission component of figure 7;
Figure 14 denotes a structural view of the retractable cylinder of the telescopic transmission component of figure 7;
Figure 15 shows a partially enlarged view of portion C of figure 14; and
Figure 16 shows a schematic view of some front components of an aerial work platform with protection device of electronic sensing type in accordance with another embodiment of the invention.

### DETAILED DESCRIPTION OF THE INVENTION

The present invention will be further described below with reference to accompanied drawings and exemplary embodiments. Here, identical numerals represent the identical components. In addition, detailed description of prior art will be omitted if it is unnecessary for illustration of the features of the present invention.

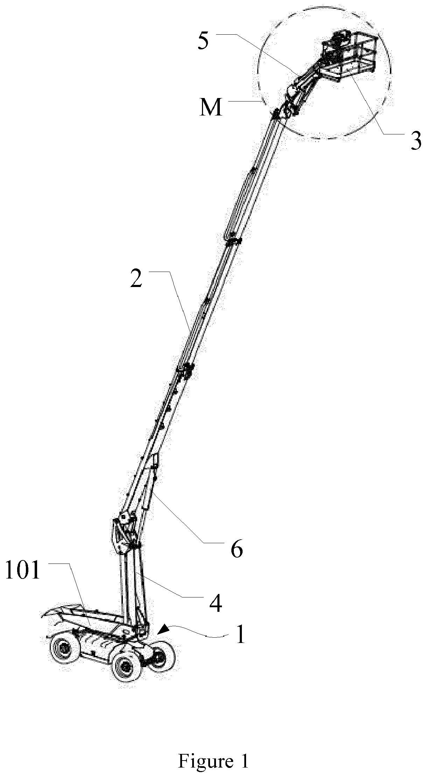

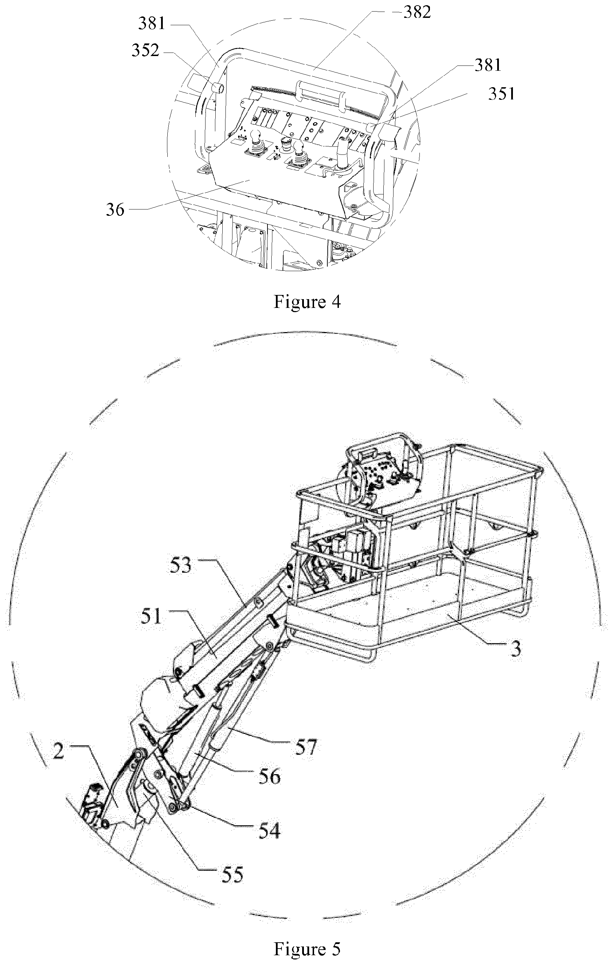

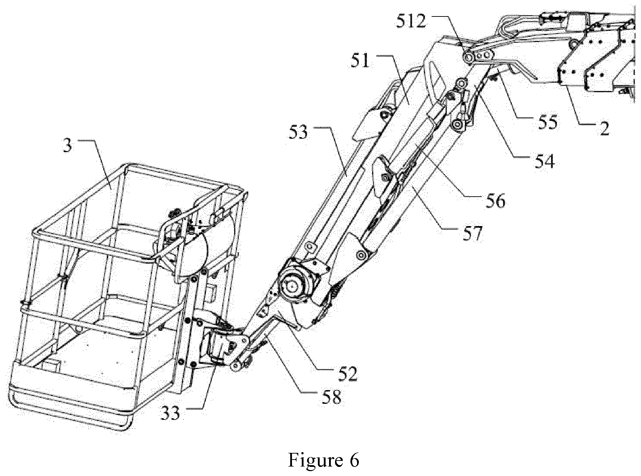

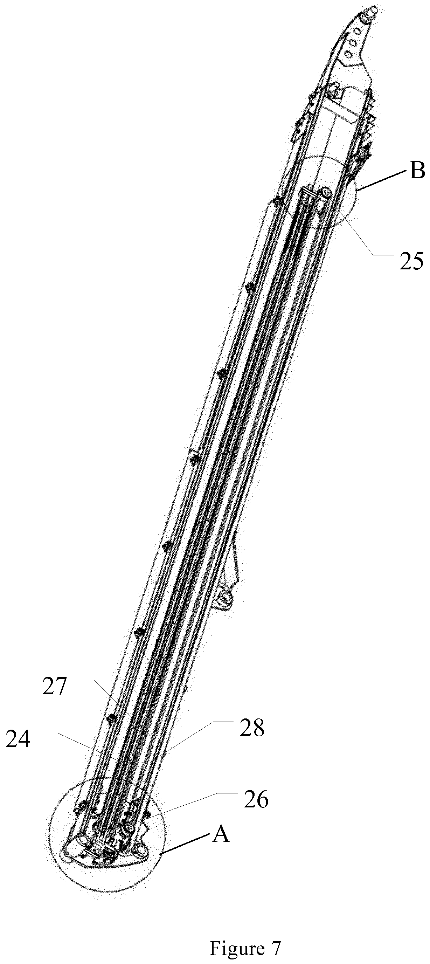

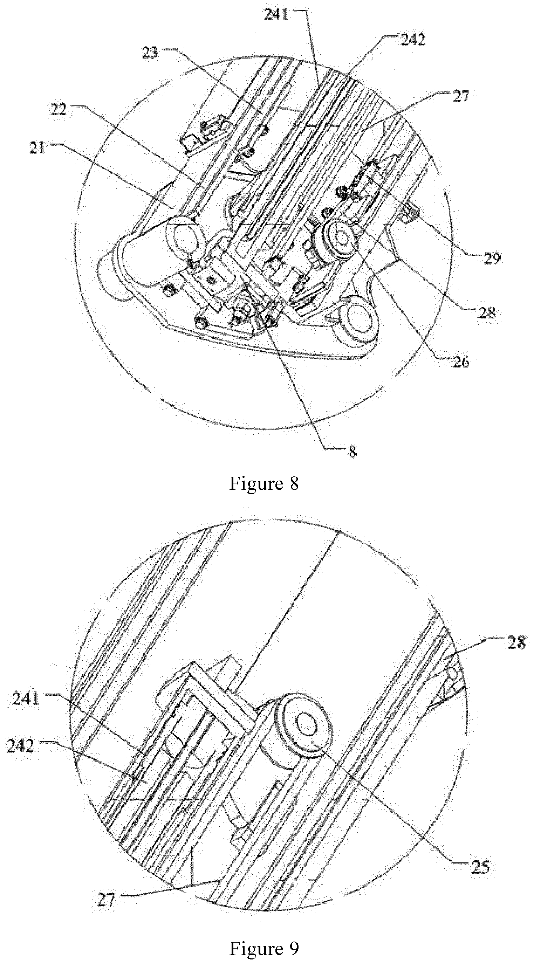

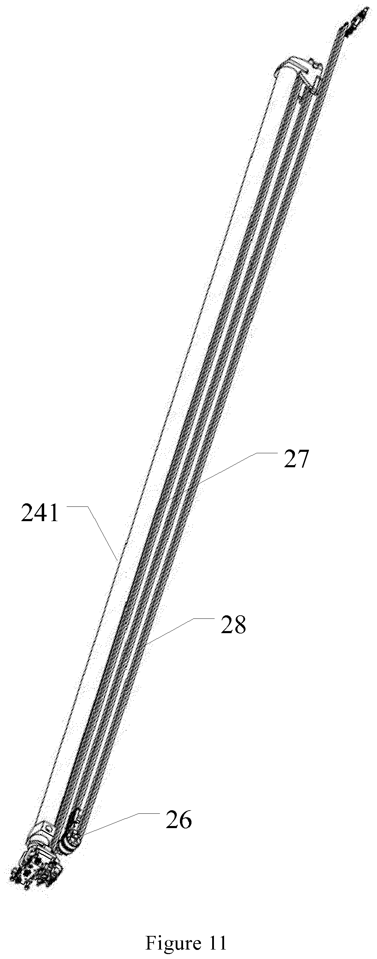

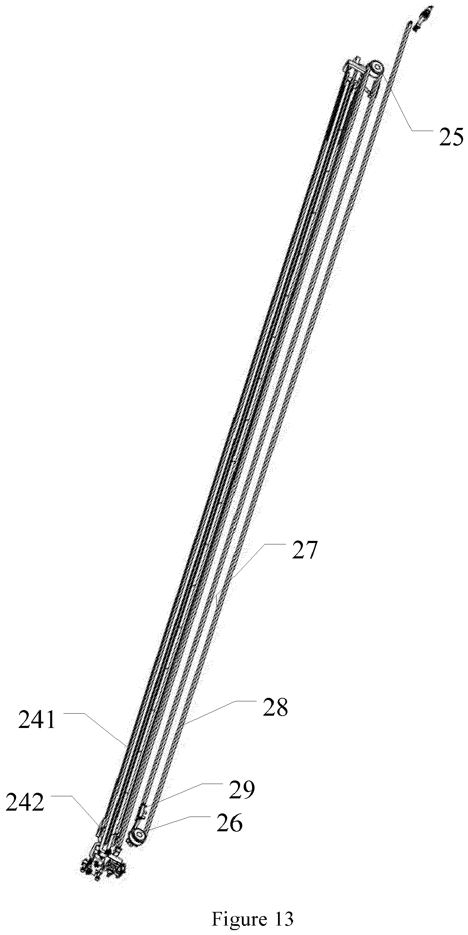

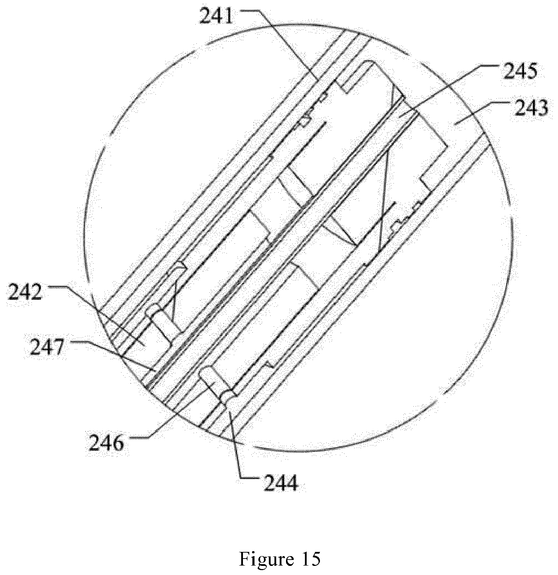

The present invention provides an aerial work platform with protection device of electronic sensing type as shown in figures 1-16. Said aerial work platform includes a vehicle 1, a telescopic transmission component 2 pivotablly installed on the vehicle 1 and an operation platform 3 connected to a distal end of the telescopic transmission component 2.

Here, the vehicle 1 includes a vehicle frame, a driving system disposed on the vehicle frame, and a control box electrically connected to the driving system. The control box is disposed at a lateral side of the vehicle frame in a rotary manner. The driving system includes a driving mechanism, a transmission mechanism, a control system, and a wheel assembly. The control box is also electrically connected with the control system. Relevant control devices electrically coupled with the control system may also be disposed on the operation platform.

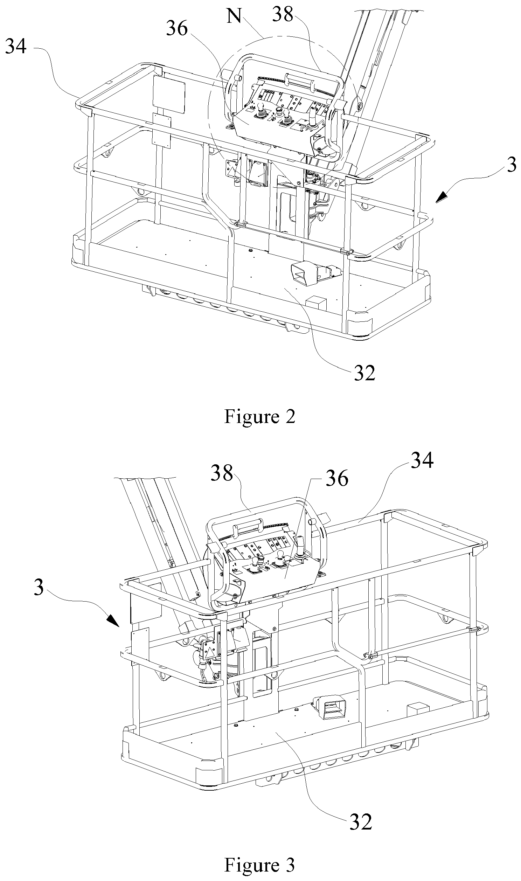

Reference is made to figures 2-4. The operation platform 3 includes a bottom plate 32, a circular fence 34 disposed on a perimeter of the bottom plate 32 and a control panel 36 installed on the circular fence 34. The control panel 36 has a barrier 38 formed on its perimeter. The barrier 38 includes two side bars 381 located at two lateral sides (taking an orientation of a standing operator facing the control panel 36 as a datum) of the control panel 36. A protection device of electronic sensing type electrically connected with the control panel 36 is disposed on the barrier 38. The protection device of electronic sensing type includes an optical transmitter 351 and an optical receiver 352 which cooperate with each other and are faced towards each other.

It is noted that the circular fence 34 is mostly made of a plurality of protection rods or plates. The optical transmitter 351 is preferably an infra-red transmitter, and the optical receiver 352 is preferably an infra-red receiver. The barrier 38 includes not only the side bars 381 located at two lateral sides of the control panel 36 respectively, but also a front bar 382 located at a front side (taking an orientation of a standing operator facing the control panel 36 as a datum) of the control panel 36. Here, the two side bars 381 may be integrally formed with the front bar 382. Alternatively, they may be independent bars. Or, two adjacent bars are integrally formed, while the rest one is independent of them. Preferably, the two side bars 381 are integrally formed with the front bar 382. Of course, the barrier 38 may also not include the front bar 382.

In addition, the optical transmitter 351 and optical receiver 352 are embedded into the two side bars 381 respectively. Or, the optical transmitter 351 and optical receiver 352 may be disposed on top portions of the two side bars 381 respectively.

Preferably, a plurality of operation buttons is provided on the control panel 36. The barrier 38 is majorly constructed of a number of protection rods. In particular, it may be constructed of a plurality of vertical rods secured vertically on the control panel 36 or circular fence 34 and a plurality of horizontal rods (the horizontal rods may be bent dependent upon detailed requirement)at least partially secured on the vertical rods. The optical transmitter 351 and optical receiver 352 are embedded into the horizontal rods (portions located at two lateral sides of the control panel) or embedded into the vertical rods (portions located at two lateral sides of the control panel) . Of course, the optical transmitter 351 and optical receiver 352 may also be secured on top portions of the horizontal rods (portions located at two lateral sides of the control panel) respectively, or be secured on bottom portions of the horizontal rods (portions located at two lateral sides of the control panel) respectively. In addition, the barrier 38 may also be mainly made of protection plates, and the optical transmitter 351 and optical receiver 352 may be arranged in a similar manner as described above. Accordingly, as the optical transmitter 351 and optical receiver 352 are embedded into the two side bars 381 respectively, the optical transmitter 351 and optical receiver 352 are effectively protected from being damaged by an external object due to collision, thereby reducing repair and maintenance cost. Moreover, they are also protected from dust, water and weathering and accordingly, their lifetime is effectively extended.

In a summary, as a protection device, in particular a protection device of electronic sensing type including an optical transmitter and optical receiver of high sensitivity is installed on the operation platform 3, once the body of the operator obstructs propagation of rays; the protection device of electronic sensing type will send signals to a corresponding controller which in turn, cuts off engine power of the aerial work platform, thus stopping further running of the platform and avoiding further squeezing of the operator body and ensuring safety of the operator. In contrast, a conventional mechanical protection lever works with lag. Also, as the optical transmitter 351 and optical receiver 352 of the protection device of electronic sensing type are oppositely disposed on the two side bars 381 which are located at two lateral sides of the control panel 36 respectively. Therefore, rays transmitted from the optical transmitter 351 may be directly received by the optical receiver 352 directly disposed on an opposing side bar 381. Comparatively, in a prior art electronic protection device, a transmitter and receiver are positioned on a same side, and a reflector on an opposite end functions to reflect rays sent by the transmitter back to the receiver. Therefore in the protection device of electronic sensing type of the invention, rays coming from the optical transmitter 351 are directly received by the optical receiver 352 installed on an opposite side without arrangement of an optical reflector. No optical reflector is used in the protection device of electronic sensing type, thus there being no need for an optical reflector and transmission manner of rays being changed. In current invention, fewer components are used, the structure is simple, the cost is inexpensive, and installation is convenient. Moreover, the transmission path of rays is short, and accordingly, more faster and sensitive response may be made. In addition, the optical transmitter and optical receiver are laterally disposed at two side bars of the control panel respectively without coming into a region between the two side bars. Consequently, operation space of the operator will not be occupied, thereby the operator being able to freely, conveniently and comfortably manipulate various buttons on the control panel.

Also, during movement of a traditional aerial work platform, its internal components are unable to cooperate with each other and realize self-adjustment with accuracy and effectiveness. For example, in up and down movement of the operation platform, the operation platform will necessarily moves a corresponding distance in a horizontal direction. It is hard for the operation platform to move only in a vertical direction while no movement in horizontal direction. In other words, pure down and up movement is impossible. To realize pure down and up movement for the operation platform without lateral movement, the location of the operation platform should be adjusted for many times, including vertical adjustment and horizontal adjustment. For instance, when it is desired to make upward movement without horizontal movement for the operation platform, at first the operation platform should be raised and during this period it will also move forward. As a result, the operation platform should also be controlled to move backward. These adjustments should be done for many times to get a predefined location. This kind of adjustment is troublesome and of low efficiency. Furthermore, for a conventional aerial work platform to realize only horizontal movement without vertical movement of the operation platform, in general a telescopic forearm (that is, a telescopic connection component) should be employed. Direct achievement of this point is impossible by cooperation of other respective components (such as a supporting arm, and a telescopic transmission component) and self-adjustment (excluding repetitive control and adjustment). For an aerial work platform without a telescopic forearm (telescopic connection component), repetitive control and adjustment is required to realize horizontal movement of the operation platform while maintaining its height unvaried. Other control means is less flexible and troublesome. Based on this point, the present invention makes improvement upon above conventional problems and the detailed improvement features in a control system.

The control system includes a main controller (not shown) capable of controlling movement manner of the operation platform 3 by controlling movement of respective relevant components and luffing so that the operation platform 3 will move along a horizontal direction while keeping its height at a first predefined location, or move along a vertical direction while keeping its horizontal distance relative to a second predefined location unchanged. Specifically, the main controller includes a computing module for determining the expected luffing angle and/or movement length of relevant components based on certain control instructions; a performing circuit module for providing corresponding control instructions based on the calculation result of the computing module; and a memory module for storing related data (including height value and horizontal movement distance value of the operation platform) . These modules may be implemented by for example chips and/or other corresponding electronic components and are connected with each other.

Specifically, the telescopic connection component 5 includes an outer arm 51, an inner arm 52 slidably disposed inside the outer arm 51 and capable of being moved out from one end of the outer arm 51, and a forearm telescopic cylinder 53 disposed between the outer arm 51 and inner arm 52.

It is noted that the forearm telescopic cylinder 53 includes a cylinder body (not shown) and a piston rod (not shown) slidably disposed into the cylinder body. Preferably, the cylinder body is secured onto an outer wall of the outer arm 51, and an extension end of the piston rod is secured onto an outer wall of the inner arm 52.

A first levelling cylinder 55 is disposed between the telescopic transmission component 2 and telescopic connection component 5. A forearm head 54 is hinged to one end, which is connected to the telescopic transmission component 2, of the telescopic connection component 5. One end of the first levelling cylinder 55 is hinged to the telescopic transmission component 2, while the other end thereof is hinged to the forearm head 54. The telescopic connection component 5 further includes a forearm luffing cylinder 57 one end of which is hinged to the forearm head 54, while the other end thereof is hinged to the outer wall of the outer arm 51. By this means, the forearm head 54, outer arm 51 and forearm luffing cylinder 57 constitute a triangle luffing mechanism.

It is noted that the forearm head 54, outer arm 51 and telescopic transmission component 2 are hinged together by a pin 512. The first levelling cylinder 55, forearm head 54, forearm luffing cylinder 57 and outer arm 51 constitute a four-bar linkage. Moreover, the first levelling cylinder 55 may operate electrically or hydraulically. In case operating under electric manner, an angle sensor (not shown) matched with the first levelling cylinder 55 is installed on the pin 512 which hinges the forearm head 54, outer arm 51 and telescopic transmission component 2 together. In case operating under hydraulic manner, a hydraulic levelling device matched with the first levelling cylinder 55 is disposed on the telescopic transmission component 2. Preferably, the first levelling cylinder 55 works in electrical levelling manner.

Here, the forearm head 54 may be leveled by pushing and pulling motion of the first levelling cylinder 55 upon the head 54. Specifically, an angle sensor installed on the forearm head 54 sets an angle of the head 54 as zero. During luffing of the telescopic transmission component 2, the forearm head 54 will tilt accordingly. As a result, angle signal of the forearm head 54 will be sent to a corresponding controller through the angle sensor. After receiving the signal, the controller will generate a corresponding command to cause telescopic motion of the first levelling cylinder 55, thereby realizing levelling of the forearm head 54. In other words, the forearm head 54 is controlled to be oriented at its predefined zero angle. In addition, up and down luffing of the telescopic connection component 5 may also be realized by telescopic movement of the forearm luffing cylinder 57.

Furthermore, a third levelling cylinder 58 is disposed between the telescopic connection component 5 and operation platform 3. One end of the third levelling cylinder 58 is hinged to the inner arm 52, whereas the other end thereof is hinged to a rotary cylinder 33 secured onto the operation platform 3.

Preferably, a second levelling cylinder 56 is positioned between the forearm head 54 and telescopic connection component 5. One end of the second levelling cylinder 56 is hinged to the forearm head 54, while the other end thereof is hinged to the outer wall of the outer arm 51. A cavity of the second levelling cylinder 56 communicates with a cavity of the third levelling cylinder 58 by means of an oil tube.

It is noted that arrangement of the second levelling cylinder 56 and third levelling cylinder 58 avoids tilting of the operation platform 3 during luffing of the telescopic connection component 5. In other words, the operation platform 3 is always maintained at a horizontal location during luffing of the telescopic connection component 5. Accordingly, the second levelling cylinder 56 and third levelling cylinder 58 have a second level of levelling function (the first levelling cylinder 55 and associated device realize a first level of levelling function). As the cavity of the second levelling cylinder 56 communicates with that of the third levelling cylinder 58 by an oil tube, levelling may be achieved by adjusting telescopic motion of the second and third levelling cylinders 56 and 58. The detailed levelling processing is described below. When the telescopic connection component 5 luffs upwardly, a telescopic rod of the forearm luffing cylinder 57 comes out and at the same time, a telescopic rod of the second levelling cylinder 56 also comes out. At this time, hydraulic medium inside a rod chamber of the second levelling cylinder 56 flows under pressure into a rod chamber of the third levelling cylinder 58. Next, a telescopic rod of the third levelling cylinder 58 retracts, and hydraulic medium contained inside the non-rod chamber of the third levelling cylinder 58 flows into a non-rod chamber of the second levelling cylinder 56 through an oil tube so as to realize levelling by balancing pressure inside relevant chambers of the second and third levelling cylinders 56 and 58. This principle also applies when the telescopic connection component 5 luffs downwardly except for flowing direction of hydraulic medium and movement direction of relevant components. Here, cross section areas of the cylinders, telescopic rods of the second and third levelling cylinders 56 and 58, and traveling distances of the telescopic rods thereof are predefined and matched among each other.

Reference is made to figures 1 and 5-15 illustrating a typical embodiment of a telescopic transmission component of the aerial work platform of the invention. The telescopic transmission component 2 includes a base arm 21, a second arm 22, a third arm, a telescopic cylinder 24, a rope-expanding chain 27, and a rope-retracting chain 28.

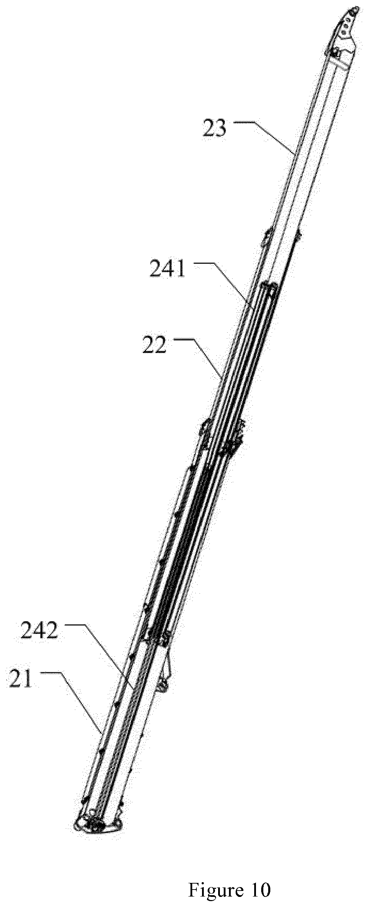

The second arm 22 is inserted into the base arm 21 and is able to move out of the base arm 21 (See an upper portion of figure 10). The third arm 23 is inserted into the second arm 22 and is capable of coming out of an extension end of the same (See an upper portion of figure 10).

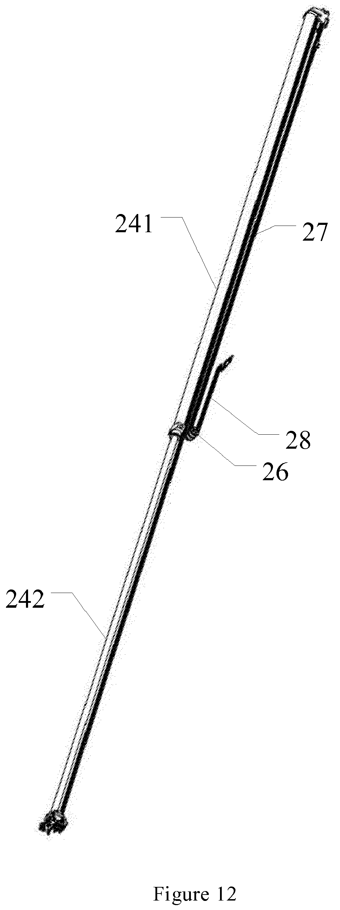

The telescopic cylinder 24 includes a cylinder barrel 241 secured onto the second arm 22 and a telescopic rod 242 inserted into the barrel 241. The telescopic rod 242 has a hollow arrangement 247 communicating with a cavity of the cylinder barrel 241. An oil guiding tube 245 is provided into the hollow arrangement 247 of the telescopic rod 242, and the extension end of the telescopic rod 242 is secured onto the base arm 21 (See a lower portion of figure 12) . Preferably, an end surface of the extension end of the telescopic rod 242 is fixed to the base arm 21 through a mounting plate 8. A connection portion is provided on the cylinder barrel 241 at a location adjacent to the extension end of the telescopic rod 242 for securing the barrel 241 to the second arm 22. The connection portion may in the form of an axle hole. That is, the cylinder barrel 241 may be mounted on the second arm 22 by inserting a pin into said axle hole. Of course, the connection portion of the barrel 241 may also be designed to locate at other positions of the barrel 241, for example at a middle position.

Moreover, a first sprocket wheel 25 is provided on the telescopic cylinder 24, a second sprocket wheel 26 is provided on the second arm 22, and the second sprocket wheel 26 is closer to the extension end of the cylinder barrel 241 than does the first sprocket wheel 25. One end of the rope-expanding chain 27 is attached onto the base arm 21, while the other end thereof runs around the first sprocket wheel 25 and then is attached onto the third arm 23. In other words, the two ends of the rope-expanding chain 27 are both located below the first sprocket wheel 25 (See orientation of figures) . One end of the rope-retracting chain 28 is attached onto the third arm 23, while the other end thereof runs around the second sprocket wheel 26 and then is attached onto the base arm 21. In other words, the two ends of the rope-retracting chain 28 are both located above the second sprocket wheel 26(See orientation of figures). Preferably, the first sprocket wheel 25 is located on a cylinder head, which cylinder head is located at one end away from an extension end, of the telescopic cylinder 24. The second sprocket wheel 26 is located on the second arm 22 at a location adjacent to the extension end of the telescopic rod 242. By this manner, the first and second sprocket wheels 25 and 26 are capable of being positioned above and below the cylinder barrel 241(See orientation of figures). This ensures stable movement of the cylinder barrel 241 and accordingly, it also ensures stable rotation and telescopic motion of relevant components. Of course, the first and second sprocket wheels 25 and 26 may also be positioned at other suitable locations. For instance, the first sprocket wheel 25 may be located at a middle area of the cylinder barrel 241, and the second sprocket wheel 26 may be placed on the second arm 22 at a location close to a middle portion of the cylinder barrel 241.

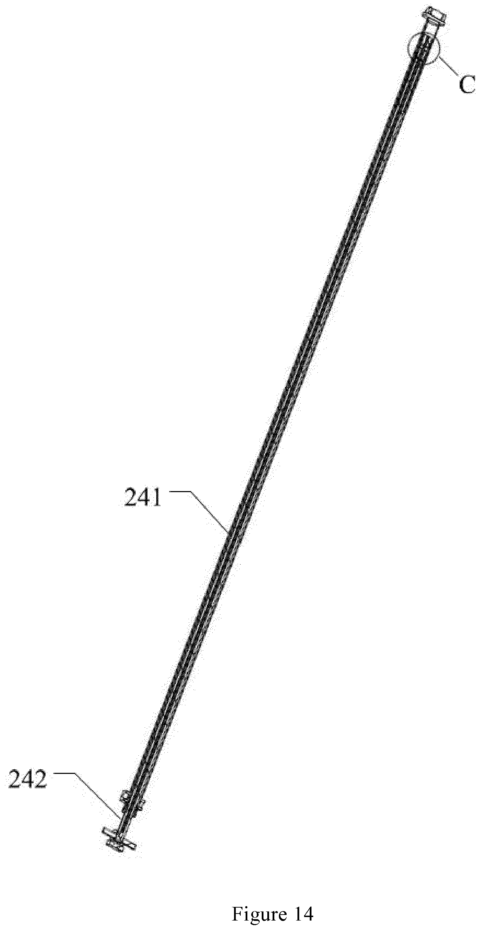

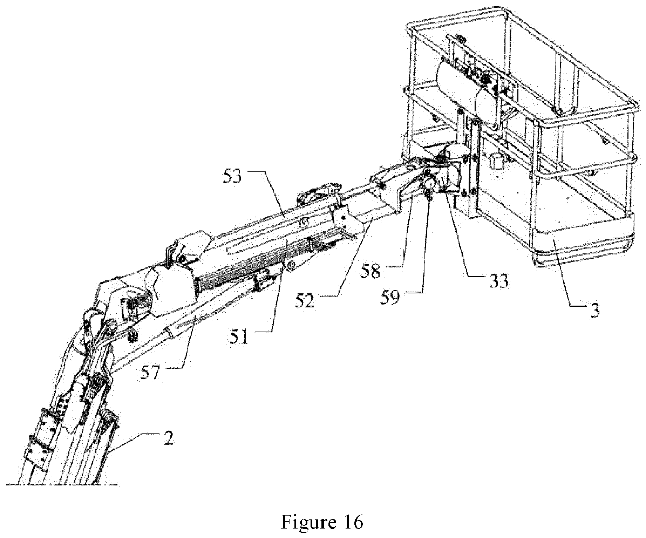

As shown in figures 14-15, an inner cavity of the cylinder barrel 241 of the telescopic cylinder 24 is separated to form a rod chamber 244 and a non-rod chamber 243. In other words, partial space of the inner cavity of the barrel 241 overlaps the telescopic rod 242 and thus forms the rod chamber 244. Partial space of the inner cavity of the barrel 241 doesn't overlap the rod 242 and locates at a upper right side (See figure 16) of a distal end of the telescopic rod, and accordingly, forms the non-rod chamber 243. The hollow arrangement 247 of the telescopic rod 242 communicates with the rod chamber 244 via a connection path 246. The hollow arrangement 247 of the rod 242 together with the oil guiding tube 245 inside the arrangement 247 is communicated with an external oil tube.

Furthermore, one end of the rope-retracting chain 28 is attached onto the third arm 23 by means of a chain connection member 29, similarly, one end of the rope-expanding chain 27 is also attached onto the third arm 23 by means of the chain connection member 29, and the two ends are located at two sides of the chain connection member 29. By this manner, motions of the rope-expanding chain 27, rope-retracting chain 28 and third arm 23 are coordinated among each other. Alternatively, the rope-expanding chain 27 and rope-retracting chain 28 may be connected to the third arm 23 with different connective members.

Moreover, a chain detection device is provided on the rope-expanding chain 27 for real time detecting status of related chain. When a chain is broken or exceeds a predefined loose value, the chain detection device will generate alert signals to guarantee safety of the telescopic transmission component 2, and further guarantee safety of operators and other staff. In particular, the chain detection device may be disposed on the rope-expanding chain 27 at one end thereof where the chain 27 is connected to the base arm 21.

Preferably, all of the base arm 21, second arm 22 and third arm 23 are of hollow arrangement. It is noted that these arms are by no means limited to this hollow arrangement, and in fact they may be of other constructions.

Furthermore, these hollow arrangements of the base arm 21, second arm 22 and third arm 23 form a telescopic cavity into which the telescopic cylinder 24, first sprocket wheel 25, second sprocket wheel 26, rope-expanding chain 27 and rope-retracting chain 28 are received, thus leading to a compact structure for the telescopic transmission component 2, and further reducing wear and aging of the components, thereby extending lifetime. This also reduces repair and maintenance frequency and makes it more convenient to repair and maintain the same, thus decreasing related costs. In addition, to certain extent these components are not exposed outside and accordingly, risk of operators being injured due to unintentional collision with the components is also reduced. Of course, it is also feasible to place the telescopic cylinder 24, first sprocket wheel 25, second sprocket wheel 26, rope-expanding chain 27 and rope-retracting chain 28 outside the telescopic cavity (that is, place them onto the outer walls of the base arm 21, second arm 22 and third arm 23) .

In a summary, as the telescopic rod 242 is secured onto the base arm 21, when driven by suitable liquid medium, the cylinder barrel 241 will move upwardly together with the second arm 22 such that the second arm 22 will move out of the base arm 21. In turn, under the traction of the rope-expanding chain 27 and first sprocket wheel 25, the third arm 23 is pulled to move out of an upper end of the second arm 22. With continuous injection of the liquid medium into the cylinder barrel 241, the second arm 22 and third arm 23 will continue to move toward the upper end until desired travel distance or maximum predefined distance is reached. During this movement, the first sprocket wheel functions as a movable pulley, and in this situation, displacement of the third arm 23 relative to the base arm 21 is two times as long as a travel distance of the cylinder barrel 241 (the distance of the second arm 22 with respect to the base arm 21) . In this case, telescopic distance is certainly extended.

When oil enters the rod chamber 244 of the cylinder barrel 241 through the hollow arrangement 247 of the telescopic rod 242, the barrel 241 will drive the second arm 22 to move together downwardly such that the second arm 22 will retract from the upper end of the base arm 21. In turn, the third arm 23 will retract into the second arm 22 when driven by the rope-retracting chain 28 and second sprocket wheel 26. With continuous oil injection into the telescopic rod 242, the second arm 22 and third arm 23 will continuously retract towards a low end until a desired retracting location or complete retracting location is reached. During this retraction, the second sprocket wheel 26 works as a movable pulley such that the displacement of the third arm 23 relative to the base arm 21 is two times as long as the travel distance of the cylinder barrel 241 (that is, the distance of the second arm 22 relative to the base arm 21).

Specifically, please refer to figure 1 and other related figures. The third arm 23 is hinged to the operation platform 3 by said telescopic connection component 5. In other words, the third arm 23 is hinged to the outer arm 51 of the telescopic connection component 5, and the inner arm 52 of the component 5 is connected with the operation platform 3. The telescopic connection component 5 helps the operation platform 3 move further along a horizontal direction. The base arm 21 is hinged to the vehicle 1 by the supporting arm 4 which is movably connected with relevant component of the vehicle 1 (for example it may be movably connected with the turret 101 of the vehicle 1). In addition, a luffing cylinder 6 is disposed between the base arm 21 and supporting arm 4. By this manner, the base arm 21, supporting arm 4 and luffing cylinder 6 connected therewith also together define a reliable triangle construction. This makes sure that the aerial work platform bears more stability and security.

Furthermore, one end, close to the supporting arm 4, of the base arm 21, is provided with a length-angle sensor (not shown) for detecting a movement distance and luffing angle of the telescopic transmission component 2. Said length-angle sensor is electrically communicated with the main controller. An angle sensor (not shown) is provided on a central rotation body of the vehicle 1 for detecting rotation angle of the turret 101. The central rotation body is for causing rotation of the turret 101 of the vehicle 1. The angle sensor is electrically communicated with the main controller.

When the aerial work platform requires extending its arms, the second and third arms 22, 23 are controlled to extend of the telescopic transmission component 2. At this time, the operation platform 3 coupled with the telescopic transmission component 2 will also be extended when driven by the third arm 23. At this time, relevant cylinder 6, supporting arm 4 and telescopic connection component 5 are also controlled to adjust angle or location of relevant arms until the operation platform 3 moves to a predefined working location or a maximum extension distance is reached.

Similarly, when the aerial work platform requires withdrawing its arms, the second and third arms 22, 23 of the telescopic transmission component 2 are controlled to retract. At this time, the operation platform 3 coupled with the telescopic transmission component 2 will also be retracted when driven by the third arm 23. At this time, relevant cylinder 6, supporting arm 4 and telescopic connection component 5 are also controlled to adjust angle or location of relevant arms until the operation platform 3 moves to a predefined working location or returns to its original location without extension.

In addition, when a platform constant erect function is started for the aerial work platform, a height value of the operation platform 3 relative to a first predefined location (such as the ground, upper end surface or bottom of the vehicle 1 or the like) and horizontal moving distance of the same operation platform 3 with respect to a second predefined location (such as a side surface of the vehicle, or a central axis of the rotation body of the turret 101) this detected by the length-angle sensor are sent to the main controller for memory. Moreover, an angle sensor disposed on the rotation body will also send a rotation angle of the turret 101 to the main controller for memory. Next, if an up-down handle (for realizing vertical movement of the operation platform 3) of the control box (or other related control device of the operation platform 3) is activated, the main controller will determine the luffing angle and moving distance of the supporting arm 4, telescopic transmission component 2, and relevant luffing cylinders. Then, corresponding instructions are issued by the main controller to cause corresponding motion for the supporting arm 4, telescopic transmission component 2, and relevant luffing cylinders. By this manner, the operation platform 3 moves along a vertical direction with respect to the second predefined location without any horizontal movement. By the same token, the operation platform 3 moves along a horizontal direction with respect to the second predefined location without any vertical movement. Therefore, direct vertical or horizontal movement is realized for the operation platform without frequently adjusting vertical or horizontal location of the platform, thereby greatly improving operation convenience and working efficiency.

Correspondingly, please refer to figure 16 which illustrates another example of an aerial work platform with protection device of electronic sensing type of the invention. This example is different from the above example in that: a luffing cylinder 57 in place of relevant first level of levelling components of the above example and serving as a supporting member is disposed between the telescopic transmission component 2 and telescopic connection component 5; and the third levelling cylinder 58 works in an electrical levelling manner other than hydraulic levelling manner as described in above example, that is, an angle sensor 59 cooperating with the third levelling cylinder 58 is provided on the rotary cylinder 33.

When in operation, up and down luffing action of the telescopic connection component 5 is realized by telescopic motion of the luffing cylinder 57 located between the telescopic transmission component 2 and telescopic connection component 5. Levelling of the operation platform is conducted by telescopic motion of the third levelling cylinder 58, thus ensuring all time horizontal orientation of the platform.

Specifically, an angle sensor 59 installed on the rotary cylinder 33 sets a location of the operation platform 3 as zero. During luffing motion of the telescopic connection component 5, this angle sensor 59 will transmits electrical signals to a corresponding controller which when receives the signals, will send control command to cause telescopic motion of the third levelling cylinder 58, hence realizing levelling of the operation platform. In other words, it is maintained that the operation platform is always in its zero location.

Correspondingly, the present invention provides a method for controlling movement of an aerial work platform which includes the following steps:
1. obtaining a height value of an operation platform of the aerial work platform with respect to a first predefined location and a horizontal moving distance value of the operation platform with respect to a second predefined location and storing these values, wherein the first predefined location may be ground, an upper end surface or bottom of a vehicle, and the second predefined location may be a side surface of the vehicle or a central axis of a rotation body of a turret;
2. in response to a series of operation instructions, determining luffing angles and/or moving distance of related components following a predefined calculation rule, wherein, the related components includes a supporting arm, a telescopic transmission component and/or a luffing cylinder between the supporting arm and telescopic transmission component, and the predefined calculation manner is based on inter-influence between the luffing angle and moving distance and inter-influence among the components; and
3. based on determination result of step 2, issuing corresponding control instructions to cause a horizontal movement of the operation platform without vertical movement with respect to the first predefined location, or to cause a vertical movement of the operation platform without horizontal movement with respect to the second predefined location.

It is noted that the length-angle sensor and angle sensor of the rotation body transmit in real time relevant data detected to the main controller.

It is noted that the final result of step 3 is to maintain consistency between the actual luffing angles and/or moving distance of related components and determination result of step 2.

Therefore in current invention, fewer components are used, the structure is simple, the cost is inexpensive, and installation is convenient. Moreover, the transmission path of rays is short, and accordingly, more faster and sensitive response may be made. Moreover, a horizontal movement of the operation platform without vertical movement, or vertical movement of the operation platform without horizontal movement is realized, thus greatly improving operation convenience and working efficiency, and leading to a larger working range.

Though various embodiments of the present invention have been illustrated above, a person of the art will understand that, variations and improvements made upon the illustrative embodiments fall within the scope of the present invention, and the scope of the present invention is only limited by the accompanying claims and their equivalents.

## Claims

1. An aerial work platform with protection device of electronic sensing type comprising: a vehicle, a telescopic transmission component pivotablly installed on the vehicle and an operation platform connected to a distal end of the telescopic transmission component, wherein
the operation platform comprises a bottom plate, a circular fence disposed on a perimeter of the bottom plate and a control panel installed on the circular fence;
the control panel has a barrier formed on its perimeter, the barrier comprises two side bars located at two lateral sides of the control panel, a protection device of electronic sensing type electrically connected with the control panel is disposed on the barrier, and the protection device of electronic sensing type comprises an optical transmitter and an optical receiver which cooperate with each other and are faced towards each other.

2. The aerial work platform with protection device of electronic sensing type as recited in claim 1, wherein the optical transmitter and optical receiver are embedded into the two side bars respectively.

3. The aerial work platform with protection device of electronic sensing type as recited in claim 2, wherein the circular fence is made of a plurality of protection rods, and the optical transmitter and optical receiver are embedded into the protection rods of the two side bars respectively.

4. The aerial work platform with protection device of electronic sensing type as recited in claim 1, wherein the optical transmitter and optical receiver are secured on top portions of the side bars respectively.

5. The aerial work platform with protection device of electronic sensing type as recited in claim 1, wherein the optical transmitter is an infra-red transmitter, and the optical receiver is an infra-red receiver.

6. The aerial work platform with protection device of electronic sensing type as recited in claim 1, wherein a length-angle sensor for detecting a movement distance and luffing angle of the telescopic transmission component is disposed on said telescopic transmission component; a main controller is provided on the vehicle and is configured to cause a horizontal movement of the operation platform without vertical movement with respect to a first predefined location, or to cause a vertical movement of the operation platform without horizontal movement with respect to a second predefined location; and the length-angle sensor is electrically communicated with the main controller.

7. The aerial work platform with protection device of electronic sensing type as recited in any one of claims 1-6, wherein the telescopic transmission component is hinged to the vehicle by a supporting arm; and a luffing cylinder is disposed between the telescopic transmission component and supporting arm.

8. The aerial work platform with protection device of electronic sensing type as recited in any one of claims 1-6, wherein the telescopic transmission component is connected to the operation platform through a telescopic connection component; and a luffing cylinder is disposed between the telescopic connection component and telescopic transmission component.

9. The aerial work platform with protection device of electronic sensing type as recited in claim 1, wherein a plurality of operation buttons is provided on the control panel.
